# EUROPEAN PATENT APPLICATION

(11) **EP 3 771 811 A1**
(43) Date of publication of application: **03.02.2021**
(21) Application number: 20188798.1
(22) Date of filing: 31.07.2020
(51) Int. Cl.: F01N 13/00, F01N 3/10, F01N 9/00

(54) **SADDLE-RIDE TYPE VEHICLE HAVING LOW HYDROCARBON EMISSIONS DURING THE WARM-UP PHASE**

(30) Priority: 31.07.2019 IT 201900013461
(71) Applicant: Piaggio & C. S.P.A., 56025 Pontedera Pisa (IT)
(72) Inventor: LEARDINI, Walther, 56025 Pontedera (IT); MAGHERINI, Adriano, 56025 Pontedera (IT)
(74) Representative: Giraldi, Elisa

(57) **Abstract**

The present invention relates to a saddle-ride type vehicle (1) comprising an engine (10) provided with a combustion chamber (5) and a treatment unit (15) of the exhaust gases generated in said chamber (5) Said treatment unit (15) comprises an exhaust line (20) communicating with said chamber (5), a main catalyzer (21) and a pre-catalyzer (25) arranged along said exhaust line (20) upstream of the main catalyzer (21). According to the invention, the treatment unit (15) comprises partializing means (8) which, when activated, partialize the flow rate of said exhaust gases directed to said main catalyzer (21) to a predetermined percentage. Such partializing means (8) are operatively arranged along said exhaust line (20) between the pre-catalyzer (25) and the main catalyzer (21) and are activated/deactivated as a function of the temperature of said pre-catalyzer (25).

## Description

### FIELD OF THE INVENTION

The present invention relates to the field of the construction of saddle-ride type vehicles, meaning, in general, a moped or motorcycle with two, three or four wheels, intended primarily for the transport of persons. In particular, the present invention relates to a saddle-ride type vehicle with low hydrocarbon emissions during the engine warm-up phase. The invention further relates to a method for reducing hydrocarbon emissions in a saddle-ride type vehicle.

### PRIOR ART

In recent years, policies aimed at reducing air pollution have led to increasingly stringent regulations on exhaust emissions of pollutants generated by heat engine vehicles. Such regulations also apply to saddle-ride type vehicles to which this invention refers.

It is known that combustion gases comprise several compounds, such as unburnt hydrocarbons, nitrogen compounds, carbon monoxide, water. An exhaust gas treatment unit is provided into which the combustion products are conveyed through appropriate manifolds to reduce the percentage of pollutants released into the atmosphere (in particular NOx, CO and HC). Typically, the treatment unit comprises at least one main catalyzer into which pollutants are converted. The catalyzer is usually placed inside the silencer (muffler), which is located, as known, at the end of the exhaust line. The main catalyzer is of considerable size because its configuration must ensure the abatement of polluting substances even when the engine is running at the maximum of performance or when exhaust gas production is maximum. At the same time, its mass must be such to maintain a sufficient catalysis temperature level even when the engine is operated at low load (low rpm).

Due to its size, the main catalyzer cannot be installed in a position close to the heat engine and therefore requires a relatively long time to reach the correct operating temperature, this indicating a minimum temperature level that allows the effective catalysis of the polluting substances.

To reduce emissions even in *"cold engine"* conditions (i.e. when the main catalyzer has not yet reached the working temperature) it is known to install a second catalyzer, hereinafter named pre-catalyzer, between the exhaust flange of the engine combustion chamber and the main catalyzer. Typically, the pre-catalyzer has a volume, and thus a footprint, which is markedly smaller than the main catalyzer and can thus be installed close to the combustion chamber. In this manner, the higher-temperature exhaust gases cross the pre-catalyzer and quickly activate the catalytic reaction. When the engine is cold, the pre-catalyzer thus compensates the operation of the main catalyzer, which requires a longer time interval to reach the correct efficiency.

As indicated above, the regulations impose an increasingly stringent reduction in emissions of pollutants, especially of hydrocarbons. In other words, the most critical phase is undoubtedly the one just after the ignition of the vehicle, i.e. when the main catalyzer has not reached full efficiency. Therefore, the Applicant has identified the need for new technical solutions that make it possible to comply with the regulations on pollutant emissions and thus improve the operation of the exhaust gas treatment unit without intervening on the materials and dimensions of the pre-catalyzers.

### SUMMARY OF THE INVENTION

It is the main task of the present invention to provide a saddle-ride type vehicle that makes it possible to respect the standards in terms of pollutant emissions. In the context of this task, it is a first object of the present invention to provide a saddle-ride type vehicle, the exhaust gas treatment unit of which allows a strong reduction of emissions, especially during the warm-up phase of the engine. It is yet another object of the present invention to provide a vehicle in which the treatment unit allows a strong reduction of emissions without impacting on the structure and materials used for the catalyzers. It is a not last object to provide a vehicle, the exhaust gas treatment unit of which is reliable and easy to manufacture at competitive costs.

The Applicant has found that the aforesaid task and purposes can be indicated by temporarily increasing the exhaust gas pressure in the part of the exhaust line comprising the pre-catalyzer and thus rapidly increasing the temperature of the pre-catalyzer by effect of the stagnation of hot gases inside the pre-catalyzer. In particular, the aforesaid task and objects are achieved through a saddle-ride type vehicle comprising:
- an engine provided with a combustion chamber;
- a treatment unit of the exhaust gases generated in the combustion chamber, wherein said unit comprises an exhaust line communicating with the combustion chamber of the engine, a main catalyzer and a pre-catalyzer arranged along the exhaust line so that the pre-catalyzer is arranged upstream of the main catalyzer with respect to the feeding direction of the gases along said exhaust line.

The vehicle according to the invention is characterized in that the treatment unit comprises partializing means, which, when activated, partialize the passage area of the exhaust gases directed to the main catalyzer to a predetermined percentage. Such partializing means are operatively arranged along the exhaust line between the pre-catalyzer and the main catalyzer and are activated/deactivated as a function of the temperature of said pre-catalyzer. According to an embodiment, the vehicle comprises an electrical control unit connected to the partializing means to control their operation. Such control unit generates at least one first control signal after which the partializing means are either activated or deactivated. Such first control signal is generated as a function of the temperature of said pre-catalyzer.

According to a possible embodiment, the partializing means comprise a valve which includes a shutter which is movable between a first position characterizing a deactivation condition of said partializing means, and a second position characterizing an activation condition of said partializing means, wherein said shutter moves from said first position to said second position or vice versa following said first signal generated by the control unit.

Preferably, said first position and said second position are identified by corresponding abutment surfaces defined by the valve body, wherein said valve comprises elastic means which act on said movable shutter to force it against a first of said abutment surfaces. Following said first control signal generated by said control unit, the shutter moves in opposition to said elastic means until it reaches a second of said abutment surfaces.

According to a possible embodiment, the partializing means are normally activated and deactivated following the first control signal generated by the control unit when the temperature of said pre-catalyzer exceeds a predetermined value.

According to an alternative embodiment, the partializing means are normally deactivated and are activated following the first control signal generated by the control unit when the temperature of the pre-catalyzer is below a predetermined value. The control unit interrupts the first control signal when the temperature of the pre-catalyzer is either greater than or equal to said predetermined value. According to a possible embodiment, the vehicle comprises temperature sensor means to detect the actual temperature of the pre-catalyzer; such sensor means are electrically connected to the control unit which generates said at least first control signal as a function of the actual temperature detected by the sensor means.

According to an alternative embodiment, the control unit generates said at least one first control signal according to a model for predicting the temperature variation of said pre-catalyzer in a given time interval, from an initial temperature of the heat engine and in a given operating condition of the engine itself.

In a possible embodiment thereof, the partializing means are configured to reduce said passage area from a first value corresponding to no partialization, to at least one second value corresponding to a percentage of said first value comprised between 50% and 95%, more preferably between 70% and 95%.

In a possible embodiment, the partializing means are configured to reduce said passage area from a first value corresponding to no partialization, to only one predetermined percentage value of a first value corresponding to no partialization. Alternatively, the partializing means are configured to reduce the passage area from a first value corresponding to no partialization, to any value comprised in a range between 0 and 95% of said first value.

According to a possible embodiment, the vehicle comprises means for adjusting the fuel injection adapted to be mixed with combustion supporting air to generate a mixture intended for the combustion chamber, wherein the control unit is operatively connected to the adjustment means to vary the amount of fuel based on the activation/deactivation of the partializing means.

### LIST OF FIGURES

Further features and advantages of the invention will be more apparent from the examination of the following detailed description of some preferred, but not exclusive embodiments of the saddle-ride type vehicle according to the invention, illustrated by way of non-limiting example, with reference to the accompanying drawings, in which:
- figure 1 is a diagram of a vehicle according to the present invention;

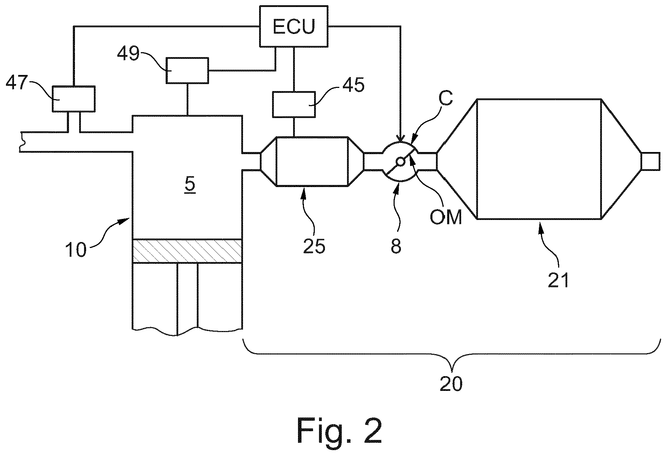

- figure 2 is a diagrammatic view of an engine and an exhaust gas treatment unit according to the present invention;
- figures 3, 4 and 5 are diagrams related to the hydrocarbon emissions generated in the context of tests performed on an engine of a vehicle according to the present invention.

### DETAILED DESCRIPTION

With reference to the aforesaid figures, the present invention relates to a saddle-ride type vehicle comprising an engine 10 provided with a combustion chamber 5. The vehicle 1 comprises a combustion product treatment unit 15 (hereinafter also referred to as *"exhaust gases"* generated inside the engine). Such unit 15 comprises an exhaust line 20 communicating with the combustion chamber 5. The treatment unit 15 comprises a main catalyzer 21 arranged along the exhaust line 20 and a secondary catalyzer 25 (hereinafter also referred to as *pre-catalyzer 25*) arranged upstream of the main catalyzer 21 with respect to the feeding direction of the exhaust gases. The secondary catalyzer 25 is thus positioned along the exhaust line 20 between the engine 10 and the main catalyzer 21.

According to the invention, the treatment unit 15 comprises partializing means 8 along the exhaust line 20 between the main catalyzer 21 and the secondary catalyzer 25. Such partializing means 8 are configured to partialize the exhaust gas flow area to the main catalyzer 21 to a predetermined value. In detail, the partializing means 8 are configured to reduce such passage area from a first value S_{MAX} corresponding to no partialization to at least one second value S_{PAR}, lower than said S_{MAX}, and corresponding to a predetermined degree of partialization. For the purposes of the invention, the term *"partialization"* thus indicates a reduction, implemented at a predetermined section of the exhaust line between the *pre-catalyzer 25* and the *main catalyzer 21,* of the useful area for the passage of exhaust gases to the main catalyzer 21. The expression *"no partialization"* is thus used to indicate a condition under which the value of said useful passage area is maximum S_{MAX}. The expression *"degree of partialization"* is used to indicate the percentage reduction of said passage area with respect to the maximum value S_{MAX}.

According to the invention, the partializing means 8 are activated as a function of the temperature of the pre-catalyzer 25. More precisely, the partializing means 8 are activated when the temperature of the pre-catalyzer 21 is below a predetermined value. The temperature value can be *"real",* i.e. detected by appropriate temperature sensor means associated with the pre-catalyzer 25, or alternatively *"expected"* based on a predictive model that takes into account the temperature change (increase) of the pre-catalyzer over a time interval (evaluated from the activation instant of the partializing means), wherein such model is defined considering a given initial temperature of the engine and given operating conditions thereof.

According to a possible embodiment, the vehicle 1 further comprises an electric control unit (hereinafter also indicated with the acronym ECU) connected to the partializing means 8 to control their operation according to the actual or expected temperature of the pre-catalyzer 25. The ECU generates at least one first control signal after which the partializing means 8 are activated to actuate the partialization (reduction of the passage area from the first S_{MAX} value to the second S_{PAR} value) or alternatively deactivated to stop the partialization if it is active.

In this respect, the partializing means 8 can be normally activated or normally deactivated. The term *"normally"* is meant to indicate a default state (default condition) of the partializing means 8 which is changed following the generation of a control signal by the ECU.

In particular, according to a first embodiment, the partializing means 8 are normally activated (passage area at the second value S_{PAR}) and the ECU generates at least one first control signal after which the partializing means 8 are deactivated to achieve a no partialization condition. In particular, the ECU generates said first control signal when the value, either real or expected, of the temperature of the pre-catalyzer 25 exceeds a predetermined value.

In an alternative embodiment, the partializing means 8 are normally deactivated (no partialization). In this case, when the temperature of the pre-catalyzer 25 is lower than a predetermined value, the ECU generates a control signal after which the partializing means 8 are activated to implement the partialization (reduction of the passage area from the first value S_{MAX} to the second value S_{PAR}). This control signal is interrupted when the temperature of the pre-catalyzer 25 exceeds said predetermined value to deactivate the partializing means 8.

According to a possible embodiment, the partializing means 8 comprise a valve (e.g. butterfly type) equipped with a shutter OM which is movable between a first operating position, characterizing the first passage area value S_{MAX} and a second operating position, characterizing said second value S_{PAR}. Following the control signal generated by the ECU, the movable shutter OM moves from the first position to the second position or vice versa.

Preferably, the two positions (first and second) of the shutter are identified by the corresponding abutment surfaces defined on the valve body C. The valve further comprises elastic means which act on the movable shutter OM forcing it against a first abutment surface which identifies one of the two positions provided for the shutter. Through the first control signal, the ECU moves the movable shutter OM, in opposition to the elastic means, until it reaches the second abutment surface, which identifies the other of the two positions provided for the shutter.

If the partializing means are normally activated, the elastic means force the movable shutter OM against a first abutment surface B1 which identifies the second shutter position (passage area with value S_{PAR}). Through the first control signal, the ECU moves the shutter until it reaches the second abutment surface which detects the first position of the shutter (no partialization).

According to the configuration of the partializing means, the ECU can further generate a second control signal to return the shutter to the first operating position. In other words, each movement of the shutter could be determined by a corresponding control signal generated by the ECU.

In any case, according to the invention, said control signals are generated according to the actual or expected temperature of the pre-catalyzer 25. More precisely, the first control signal is, in any case, generated when the temperature of pre-catalyzer 25 is below a predetermined value. Such first control signal is interrupted when the temperature reaches a predetermined value. Similarly, if the ECU is configured to generate also said second control signal, this is generated when the temperature of the pre-catalyzer 25 reaches said predetermined value.

It has been seen that during the warm-up phase of the engine by effect of the partialization of the useful passage area to the exhaust gases coming out of the pre-catalyzer 25, the latter warms up and quickly reaches the optimal operating temperature (temperature at which the catalytic reaction develops and sustains itself). This effect is due to the stagnation of exhaust gas in the pre-catalyzer 25 and in the collector section between the engine 10 and the pre-catalyzer 25 itself. Advantageously, the percentage of unburned gases which remain in the combustion chamber of the engine 10 increases in the time interval in which the exhaust gas flow is partialized and can therefore be burnt again for the benefit of a further reduction in hydrocarbons and nitrogen compounds.

According to a first embodiment of the invention, the vehicle 1 comprises temperature sensor means 45 to detect the temperature of the pre-catalyzer 25. Such sensor means 45 are electrically connected to the ECU. The latter generates said first control signal and/or said second control signal as a function of a signal generated by the sensor means 45 and characterizing the temperature detected by said sensor means.

According to a second embodiment of the invention, the ECU controls the partializing means 8 based on a predictive model of the temperature variation of the pre-catalyzer 25 over a given time interval, starting from an initial temperature of the heat engine and under certain operating conditions (load) of the engine itself. This predictive model can be defined by means of a calibration process carried out off-vehicle, which provides several tests for each of which the heat motor is driven under predefined conditions, starting from an initial temperature. The thermal behavior, i.e. the temperature variation, of the pre-catalyzer 25 during the test itself is detected for each of the tests. Based on the initial engine temperature and operating conditions, the ECU will determine the duration of the time interval during which to keep the partialization active and at the end of which the pre-catalyzer will have reached the desired temperature value.

In this embodiment, the ECU is electrically connected to additional sensor means 49 which detect the temperature of the engine, the engine cooling water or alternatively the engine head. The engine temperature measurement is already provided in saddle-ride type vehicles to implement other control functions. The control of the partialization based on a predictive model is thus particularly advantageous because it does not require the provision of sensors on the pre-catalyzer 25, but on the contrary uses sensors that are present anyway. According to an embodiment, the partializing means 8 could be configured to implement a partialization of the passage area by a percentage of the maximum value S_{MAX} within the range between 50% and 95%, even more preferably the percentage value is between 70% and 95%.

According to an embodiment, the partializing means 8 could be configured to implement a partialization of the passage area to one single predetermined value, as in the case of the aforesaid case valve provided with elastic means to keep the shutter in the first operating position.

Alternatively, the partializing means 8 could be configured to implement a percentage partialization of any value within a predetermined value range, e.g. between 0 and 95%. In other words, the partializing means 8 can reduce the value of the useful passage area to the exhaust gases to any percentage between 0 and a value corresponding to the provided maximum percentage of partialization (e.g. 95%).

In this regard, it is worth noting that in a possible mode of operation, the ECU could activate the flow partialization even in a *"hot engine"* condition, i.e. even after the two catalysts 21, 25 have reached operating temperatures. Indeed, the partialization of the exhaust gas flow leads in any case to an increase in counter-pressure at the exhaust of the combustion chamber. This condition requires an increase in engine load (i.e. an acceleration), which consequently determines the combustion efficiency, the power being equal. Furthermore, as a result of said counter-pressure, the exhaust extraction capacity decreases during the crossing phase of the engine (i.e. during the phase in which the exhaust valve and the intake valve are simultaneously open). As a result, a lesser amount of air-fuel mixture reaches the exhaust, to the advantage of the pollutants emitted into the atmosphere. Therefore, in *"already warm"* engine conditions, the ECU could be set to still implement the partialization of the exhaust gas passage section, but with a lower degree of partialization than expected in a cold engine condition.

According to a possible embodiment of the invention, the vehicle 1 comprises fuel injection control means 47 to adjust the amount of fuel that together with combustion supporting air generates the mixture intended to be introduced into chamber 5. The control unit ECU is operationally connected to the injection control means 47 to vary the quantity of fuel following the activation and subsequent deactivation of said partializing means 8. Substantially, the ECU varies the amount of fuel as a function of the engine temperature, the presence or absence of partialization and as a function of the operating conditions of the engine. The adjustment of the fuel quantity by the ECU is aimed at keeping the stoichiometric ratio of the mixture constant or within a predetermined range (preferably between 0.95 and 1).

To implement this adjustment, the ECU uses a predictive model again in this case defined through a calibration process which involves performing several tests in each of which the heat engine is operated under predetermined conditions with a predetermined exhaust partialization (activation of the partializing means 8). In each test, the engine temperature and stoichiometric ratio of the mixture are measured by using an oxygen sensor located at the exhaust of the combustion chamber_(exhaust line inlet upstream of the pre-catalyzer 25). Based on this predictive model, the ECU thus intervenes on the injection adjustment means 47 by varying the opening time of the injectors and thus varying the amount of fuel introduced into the mixture.

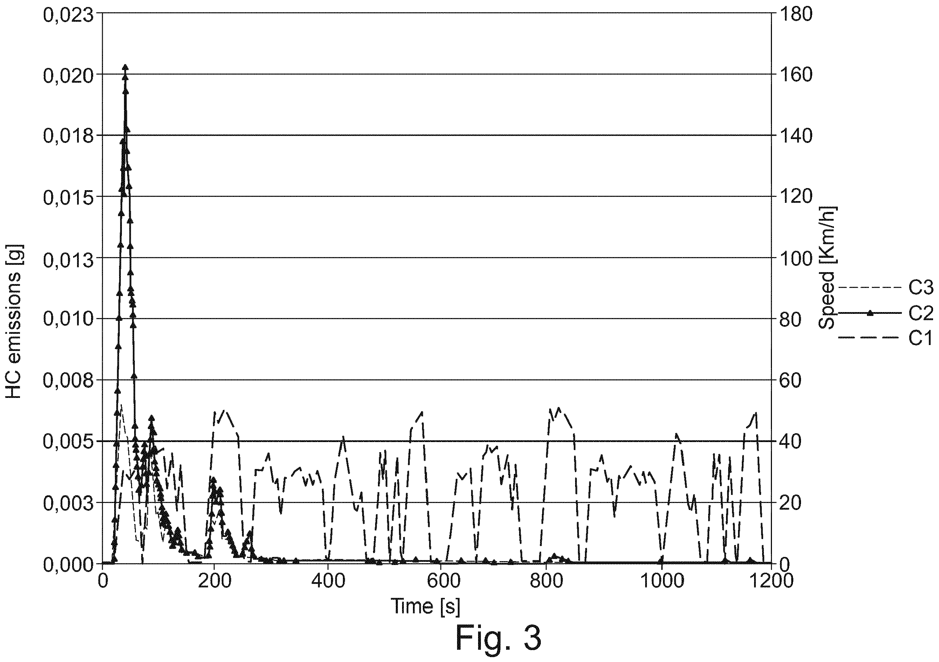

To appreciate the benefits of the present invention, reference will now be made to Figures 3 to 5 which show the hydrocarbon emissions generated by an engine in two tests conducted according to the WMTC (*Worldwide Motorcycle Test Cycles*) standard. A test according to the WMTC standard provides detecting the emissions of the engine while the engine reproduces a predetermined speed profile in a given time interval. In Figure 3, the curve C1 reproduces the speed profile according to the WMTC standard in a time interval of 1200 seconds. The curves C2 and C3 refer to two different tests. Curve C2 shows the emission pattern in a no partialization condition, while curve C3 shows the emission pattern in a 90% partialization condition for the first 60 seconds of engine operation.

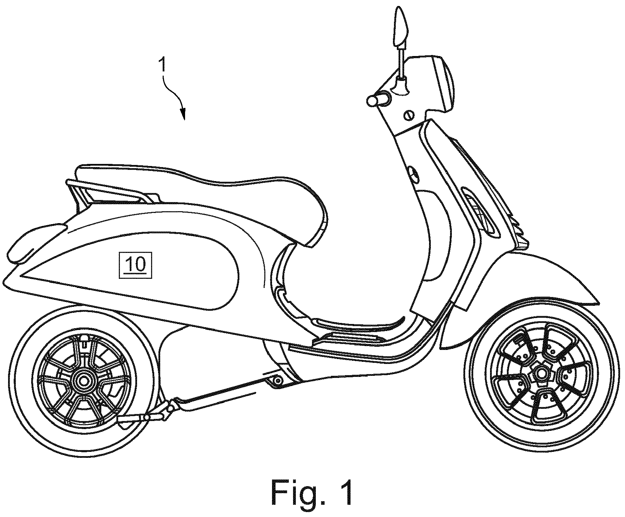

In particular, the two tests were performed on a 4-stroke engine, with a compression ratio of 12, a bore of 52 mm, a stroke of 58.7 mm for a total displacement of 124.7 cm³. The stoichiometric ratio of the mixture was kept at 1. The tested engine was connected to an exhaust gas treatment unit as shown in Figure 1, i.e. comprising a pre-catalyzer 25 and a main catalyzer 21 arranged in series along an exhaust line 20.

In the tests performed on the exhaust line, in the section between engine 10 and pre-catalyzer 25 and the section between pre-catalyzer 25 and main catalyzer 21, a diameter of 24 mm and a surface area of 4.53 cm² were provided. In the performed tests, partializing means were used comprising a butterfly valve movable between a first position, corresponding to no partialization, and a second position, corresponding to 90% partialization (passage area of 0.45 cm²).

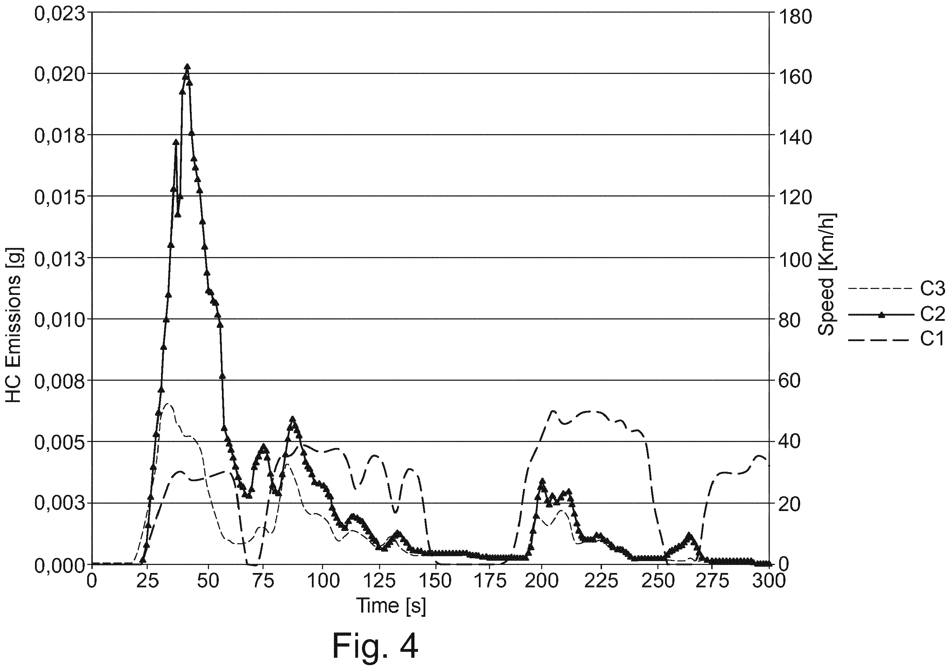

Figure 4 shows in greater detail the trend of the curves C1, C2 and C3 in the sub-interval between 0 and 300 seconds (5 minutes) or in the warm-up phase of the engine which, as indicated above, is the most critical with regard to hydrocarbon emissions (indicated by the abbreviation HC). Such emissions were measured downstream of the main catalyzer 21 or at the outlet section of the exhaust gas line.

A first test (as per WMTC procedure) was therefore performed under zero partialization conditions (partializing means deactivated) from which the curve C2 was derived. After the engine had cooled down, a second test (according to the WMTC procedure) with 90% partialization (partializing means activated) was performed for a time of 60 seconds after the engine started. From the comparison between the curves C2 and C3, the strong reduction of hydrocarbon emissions (indicated with the abbreviation HC) is apparent in the very first 60 seconds in which the exhaust partialization was activated. The two curves C2 and C3 under examination substantially show the same trend after 150 seconds from the ignition and thus after 90 seconds from the deactivation of the partializing means 8. After this time interval, the emissions are greatly reduced because the main catalyzer 21 has warmed up completely.

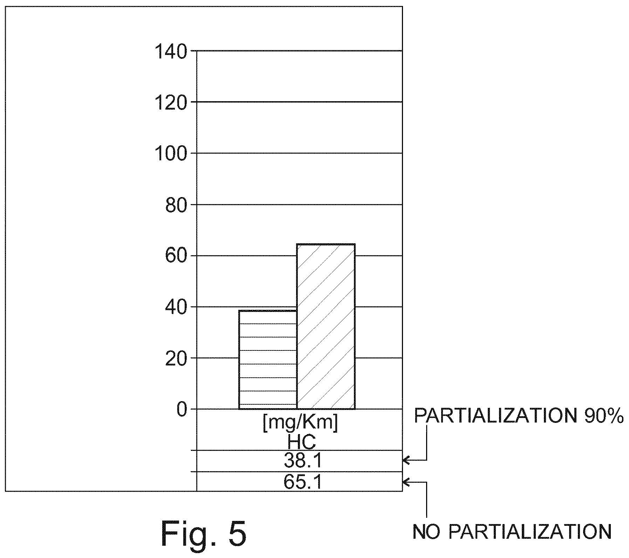

The graph in Figure 5 makes it possible to appreciate the overall impact of the activation of the partializing means on the emission cycle according to the WMTC standard. In particular, the column with vertical hatching (left) shows the total emissions in mg/km (milligrams per kilometer) measured by implementing the aforesaid partialization (90%) for the time interval (60 seconds) indicated above after starting the engine. The column with oblique hatching (right) is related to the total emissions obtained without partialization. By effect of the partialization, the total value of HC emissions, assessed over the cycle according to the WMTC standard, was reduced from 65.1 mg/km to 38.1 mg/km.

The present invention further relates to a method for reducing the emissions in a saddle-ride type vehicle, wherein said vehicle comprises an engine 10 provided with a chamber and a treatment unit 15 of the exhaust gases generated in said chamber 5 and wherein said unit 15 comprises an exhaust line 20 communicating with said chamber, a main catalyzer 21 and a pre-catalyzer 25 arranged along the exhaust line 20 so that the pre-catalyzer 21 is upstream of said main catalyzer 21 with respect to the feeding direction of the gases along said exhaust line.

In particular, the method according to the invention also comprises the steps of:
- arranging, between said pre-catalyzer 25 and said main catalyzer 21, means 8 for partializing the passage area of the exhaust gases directed to said main catalyzer 21;
- partializing, to a predetermined percentage, the passage area of said exhaust gases until the temperature of said pre-catalyzer 25 reaches a predetermined value.

As demonstrated above, the method according to the invention allows a strong reduction of hydrocarbon emissions during the warm-up phase of the engine. The partialization of the gas passage area towards the main catalyzer 21 causes a temporary stagnation of gases inside the pre-catalyzer 25 and therefore rapid warming up of the pre-catalyzer which leads to an immediate ignition of the catalytic reaction.

## Claims

1. Saddle-ride type vehicle (1), comprising an engine (10) provided with a chamber (5) and an assembly (15) for the treatment of the exhaust gases generated in said chamber (5), wherein said unit (15) comprises an exhaust line (20) communicating with said chamber (5), a main catalyzer (21) and a pre-catalyzer (25) arranged along said exhaust line (20) so that the pre-catalyzer (21) is arranged upstream of the main catalyzer (21) with respect to the feeding direction of the gases along said exhaust line (20), **characterized in that** said processing unit (15) comprises partializing means (8) for reducing the passage area of the exhaust gases directed to said main catalyzer (21), wherein said partializing means (8) are arranged along said exhaust line (20) between said pre-catalyzer (25) and said main catalyzer (21) and are activated or deactivated according to the temperature of said pre-catalyzer (25).

2. The vehicle (1) according to claim 1, wherein said vehicle (1) comprises an electronic control unit (ECU) connected to said partializing means (8) for controlling the operation thereof, wherein said control unit (ECU) generates at least a first control signal following which the partializing means (8) are activated or deactivated, said first control signal being generated as a function of the temperature of said pre-catalyzer (25).

3. The vehicle (1) according to claim 1 or 2, wherein said partializing means (8) comprise a valve which includes a shutter (OM) which is movable between a first position characterizing of a deactivation condition of said partializing means (8), and a second position characterizing of an activation condition of said partializing means (8), wherein said shutter moves from said first position to said second position or vice versa following said first signal generated by said ECU.

4. The vehicle (1) according to claim 3 when dependent on claim 2, wherein said valve comprises a valve body (C) and wherein said first position and said second position are identified by corresponding abutment surfaces defined by said valve body, wherein said valve comprises elastic means which act on said movable shutter (OM) so as to force it against a first of said abutment surfaces, and wherein, following said first control signal generated by said ECU, said shutter moves in opposition to said elastic means up to reaching a second of said abutment surfaces.

5. The vehicle (1) according to any one of claims 1 to 4, wherein said partializing means (8) are normally activated and deactivated following said first control signal generated by said control unit (ECU) when the temperature of said pre-catalyzer (25) exceeds a predetermined value.

6. The vehicle (1) according to any one of claims 1 to 4, wherein said partializing means (8) are normally deactivated and activated following said first control signal generated by said control unit (ECU) when the temperature of said pre-catalyzer (25) is lower than a predetermined value, and wherein said control unit (ECU) interrupts said first control signal when the temperature of said pre-catalyzer (25) is higher than or equal to said predetermined value.

7. The vehicle (1) according to any one of claims 2 to 6, wherein said vehicle (1) comprises temperature sensor means (45) for detecting the actual temperature of said pre-catalyzer (25), wherein said sensor means (45) are electrically connected to said control unit (ECU), which generates said at least a first control signal as a function of said actual temperature detected by said sensor means (45).

8. The vehicle (1) according to any one of claims 2 to 7, wherein said control unit (ECU) generates said at least a first control signal according to a model for predicting the temperature variation of said pre-catalyzer (25) in a given time interval, from an initial temperature of the thermal engine and under a given operating condition of the engine itself.

9. The vehicle (1) according to any one of claims 1 to 8, wherein said partializing means (8) are configured to reduce said passage area from a first value (S_{MAX}) corresponding to a null partialization, to at least a second value (S_{PAR}) corresponding to a percentage of said first value (S_{MAX}) between 50% and 95%, more preferably between 70% and 95%.

10. The vehicle (1) according to any one of claims 1 to 9, wherein said partializing means (8) are configured to reduce said passage area from a first value (S_{MAX}) corresponding to a null partialization, to only one predetermined percentage value of a first value (S_{MAX}) corresponding to a null partialization.

11. The vehicle (1) according to any one of claims 1 to 9, wherein said partializing means (8) are configured to reduce said passage area from a first value (S_{MAX}) corresponding to a null partialization, to any value within a range between 0 and 95% of said first value (S_{MAX}).

12. The vehicle (1) according to any one of claims 2 to 11, wherein said vehicle (1) comprises means (47) for adjusting the fuel injection adapted to be mixed with air/oxidizer to generate a mixture intended for said combustion chamber (5), wherein said control unit (ECU) is operatively connected to said adjustment means in order to vary the amount of fuel according to the activation/deactivation of said partializing means (8).

13. A method for reducing the emissions in a rideable-seat vehicle, wherein said vehicle comprises an engine (10) provided with a chamber (5) and a unit (15) for processing exhaust gases generated in said chamber (5), wherein said unit (15) comprises an exhaust line (20) communicating with said chamber (5), a main catalyzer (21) and a pre-catalyzer (25) arranged along said exhaust line (20) so that the pre-catalyzer (21) is upstream of said main catalyzer (21) with respect to the feeding direction of the gases along said exhaust line (20), wherein said method comprises the steps of:
A) arranging, between said pre-catalyzer (25) and said main catalyzer (21), means (8) for chocking the passage area of the exhaust gases directed to said main catalyzer (21);
B) partializing, to a predetermined percentage, the passage area of said exhaust gases until the temperature of said pre-catalyzer (25) reaches a predetermined value.
